# EUROPÄISCHE PATENTSCHRIFT

(11) **EP 1 464 888 B1**
(45) Veröffentlichungstag und Bekanntmachung des Hinweises auf die Patenterteilung: **12.01.2011**
(21) Anmeldenummer: 04006520.3
(22) Anmeldetag: 18.03.2004
(51) Int. Cl.: F21S 8/10, F21Y 101/02, F21W 101/14

(54) **Leuchte für Fahrzeuge**
Vehicular lamp
Feu pour véhicule

(30) Priorität: 31.03.2003 DE 10314350
(43) Veröffentlichungstag der Anmeldung: 06.10.2004
(73) Patentinhaber: Hella KGaA Hueck & Co., 59552 Lippstadt (DE)
(72) Erfinder: Mügge, Martin, 59590 Geseke (DE); Smarslik, Christian, 59555 Lippstadt (DE); Köneke, Josef, 33142 Büren (DE); Geesmeier, Andreas, 33098 Paderborn (DE)
(74) Vertreter: Ostermann, Thomas

(56) Entgegenhaltungen:
- DE-A1- 10 105 303
- DE-A1- 10 237 262
- DE-A1- 19 649 786
- DE-U1- 20 211 305
- JP-A- 4 017 203

## Beschreibung

Die Erfindung betrifft eine Leuchte für Fahrzeuge nach dem Oberbegriff des Patentanspruchs 1.

Aus der EP 1 118 813 A2 ist eine Leuchte für Fahrzeuge mit einer ersten Lichteinheit und einer in Lichtausbreitungsrichtung vorgelagerten zweiten Lichteinheit bekannt, denen jeweils unterschiedliche Lichtfunktionen, wie beispielsweise Schluss- und Fahrtrichtungslichtfunktion zukommen. Die Lichteinheiten sind koaxial zueinander angeordnet, wobei die vordere Lichteinheit Ausbrechungen aufweist zum Durchtritt von durch die hintere Lichteinheit erzeugten Teillichtbündeln. Den Lichtquellen der Lichteinheiten sind jeweils mehrere Reflexionsflächen zugeordnet, so dass das Austreten der Teillichtbündel mindestens zweimal reflektiert wird, bevor es in Lichtaustrittsrichtung abgestrahlt wird.

Aus der EP 1 126 209 A2 ist eine Leuchte für Fahrzeuge mit einer ersten Lichteinheit und einer in Lichtaustrittsrichtung vorgelagerten zweiten Lichteinheit bekannt, die koaxial zueinander angeordnet sind. Der als Leuchtdiode ausgeführten Lichtquelle der vorderen zweiten Lichteinheit sind mehrere Reflexionsflächen zugeordnet, so dass ein Lichtbündel unter zweimaliger Reflexion gebildet wird. Eine in der Ebene der Leuchtdiode der zweiten Lichteinheit erstreckende Scheibe mit Reflexionselementen weist darüber hinaus gerade transparente Flächensegmente auf, durch die Teillichtbündel der Lichtquelle der ersten Lichteinheit hindurchgelassen werden. Der Lichtquelle der ersten Lichteinheit ist eine Reflexionsfläche als optisch wirksame Fläche zugeordnet, an der die von der Lichtquelle emittierten Lichtstrahlen zu Teillichtbündeln zusammengefasst werden.

Nachteilig an der bekannten Leuchte ist, dass sowohl das Lichtbündel der ersten Lichteinheit als auch das Lichtbündel der zweiten Lichteinheit segmentiert aus einer Mehrzahl von Teillichtbündeln ausgebildet ist. Der Aufwand zur Erzeugung vorgegebener Lichtfunktionen ist hierdurch relativ groß.

Eine Leuchte für Fahrzeuge nach dem Oberbegriff des Anspruchs 1 ist in DE 202 11 305 U dargestellt.

Aufgabe der vorliegenden Erfindung ist es, eine Leuchte für Fahrzeuge derart weiterzubilden, dass der Aufwand zur Erzeugung von unterschiedlichen Lichtfunktionen bei geringem Bauraumbedarf reduziert wird.

Zur Lösung dieser Aufgabe weist die Erfindung die Merkmale des Patentanspruchs 1 auf.

Der besondere Vorteil der Erfindung besteht darin, dass eine klare räumliche Abgrenzung bei der Erzeugung von unterschiedlichen Lichtfunktionen gegeben ist. Statt einer Segmentierung von Lichtbündeln einer Lichteinheit erzeugen die erste und zweite Lichteinheit jeweils ein räumlich homogenes Lichtbündel, wobei das Lichtbündel der zweiten Lichteinheit mittels einer einzigen durchgehenden Grenzlinie von dem Lichtbündel der ersten Lichteinheit getrennt ist. Auf diese Weise kann der lichttechnische Aufwand für eine zwei Leuchtfunktionen beinhaltende Leuchte minimiert werden.

Nach der Erfindung werden die Lichtbündel in der ersten Lichteinheit und in der zweiten Lichteinheit von den Lichtquellen quer zur Lichtaustrittsrichtung abgestrahlt, wobei die Leuchtdioden der ersten Lichteinheit und der zweiten Lichteinheit annähernd in einer gemeinsamen Ebene angeordnet sind.

Vorteilhaft ermöglicht die Erfindung, dass die erste Lichteinheit als flächige Lichtfunktion eine Schlusslichtfunktion ausfüllen kann und zugleich in einem Betriebszustand der ersten Lichteinheit eine oder mehrere vordere zweiten Lichteinheiten beleuchtet.

Nach einer bevorzugten Ausführungsform der Erfindung ist die Reflexionsfläche der hinteren ersten Lichteinheit größer ausgebildet als die optisch wirksame Fläche der vorderen zweiten Lichteinheit. Das von der ersten Lichteinheit emittierte Lichtbündel umfasst in Projektion zur Lichtaustrittsebene somit einen wesentlich größeren Flächenbereich, so dass die erste Lichteinheit vorzugsweise zur Erzeugung eines flächenhaften Schlusslichtes dient.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: einen vertikalen Schnitt durch eine Leuchte nach einer ersten Aus- führungsform,
- Figur 2: einen vertikalen Schnitt durch eine Leuchte nach einer zweiten Aus- führungsform,
- Figur 3: einen vertikalen Schnitt durch eine Leuchte nach einer dritten Aus- führungsform,
- Figur 4: einen vertikalen Schnitt durch eine Leuchte nach einer vierten Aus- führungsform,
- Figur 5: einen vertikalen Schnitt durch eine hintere erste Lichteinheit nach einer alternativen Ausführungsform und
- Figur 6: einen vertikalen Schnitt durch eine hintere erste Lichteinheit nach einer alternativen Ausführungsform.

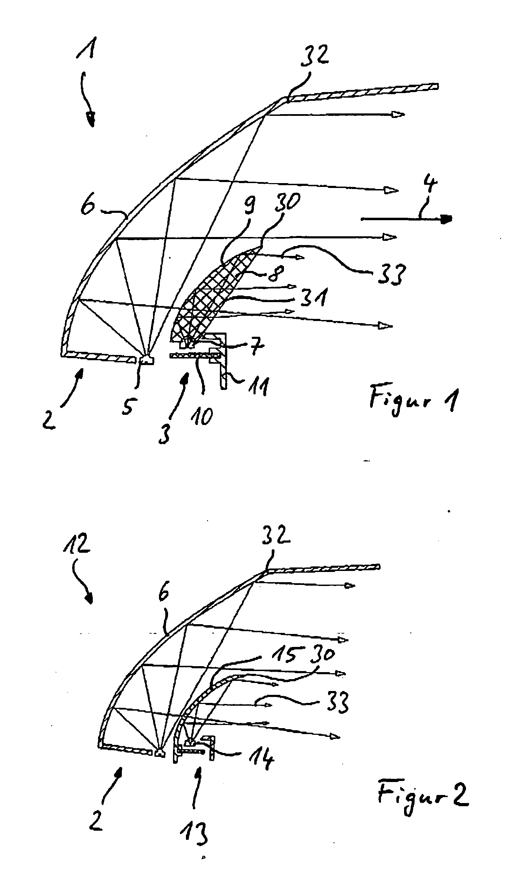

Eine Leuchte 1 für Kraftfahrzeuge nach einer ersten Ausführungsform gemäß Figur 1 besteht aus einer ersten Lichteinheit 2 zur Erzeugung einer Schlusslichtfunktion und einer zweiten Lichteinheit 3 zur Erzeugung einer anderen Signalfunktion, wie beispielsweise Bremslicht, Fahrtrichtungsanzeiger, Rückfahrlicht oder Nebelschlusslicht.

Die erste Lichteinheit 2 ist in Lichtaustrittsrichtung 4 hinter der zweiten Lichteinheit 3 angeordnet und weist eine Mehrzahl von linienförmig angeordneten Leuchtdioden 5 sowie einen großflächigen Reflektor 6 auf. Die Reihe von Leuchtdioden 5 speisen das Licht seitlich in den Raum der ersten Lichteinheit 2 ein, wobei die optischen Achsen der Leuchtdioden 5 im wesentlichen senkrecht zur Lichtaustrittsrichtung 4 orientiert angeordnet sind. Die Flächen des Reflektors 6 sind entsprechend einer vorgegebenen Schlusslichtverteilung ausgebildet. Im vorliegenden Ausführungsbeispiel ist die Fläche des Reflektors 6 parabelförmig ausgebildet. Alternativ kann die Fläche des Reflektors 6 mit optischen Elementen zur Streuung der auftreffenden Lichtes oder aus mehreren Teilflächen zusammengesetzt sein.

Die zweite Lichteinheit 3 weist eine einzige Leuchtdiode 7 und ein sich unmittelbar an die Leuchtdiode 7 anschließendes transparentes Lichtleitelement 8 auf. Die Leuchtdiode 7 weist eine optische Achse auf, die parallel zur optischen Achse der Leuchtdioden 5 der ersten Lichteinheit 2 verläuft. Das Lichtleitelement 8 ist langgestreckt und zur Lichtaustrittsseite hin geneigt ausgebildet. Eine Rückseite 9 des Lichtleitelementes 8 ist parabelförmig oder ellipsoidförmig ausgebildet, so dass die eingespeisten Lichtstrahlen an der Rückseite 9 total reflektiert werden in Richtung des Lichtaustritts. Mittels der zweiten Lichteinheit 3 wird das von der Leuchtdiode 7 emittierte Lichtbündel indirekt entsprechend der Formgebung der Rückseite 9 des Lichtleitelementes 8 verteilt. Das Lichtleitelement 8 ist transparent ausgebildet, so dass auch Lichtstrahlen des Lichtbündels der ersten Lichteinheit 2 hindurchgeleitet werden. Die Leuchtdiode 7 der zweiten Lichteinheit 3 ist auf einer Trägerplatte 10 angeordnet, die an einem Gehäusefortsatz 11 befestigt ist. Gegebenenfalls können die Leuchtdioden 5 der ersten Lichteinheit 2 und die Leuchtdiode 7 der zweiten Lichteinheit 3 auf derselben Trägerplatte angeordnet sein.

Eine Randkante 30 einer Vorderseite 31 des Lichtleitelements 8 bildet eine Grenzlinie der zweiten Lichteinheit 3 zu der ersten Lichteinheit 2. Die Grenzlinie 30 umschließt eine wesentlich kleinere Fläche als die durch eine Randkante 32 des Reflektors 6 vorgegebene Lichtaustrittsfläche der ersten Lichteinheit 2. Somit ist die Lichtaustrittsfläche der ersten Lichteinheit 2 um ein Mehrfaches größer als die Lichtaustrittsfläche der zweiten Lichteinheit 3. Dadurch, dass lediglich eine einzige Grenzlinie 30 zwischen der ersten Lichteinheit 2 und der zweiten Lichteinheit 3 vorgesehen ist, ergibt sich ein zusammenhängendes und homogenes Lichtbündel 33 der zweiten Lichteinheit 3.

Figur 2 zeigt eine zweite Ausführungsform einer Leuchte 12, die sich von der Ausführungsform gemäß Figur 1 durch Ausbildung einer anderen zweiten Lichteinheit 13 unterscheidet. Die erste Lichteinheit der Leuchte 12 ist in Übereinstimmung mit der ersten Lichteinheit 2 der Leuchte 1 ausgebildet. Für gleiche Bauteile oder Bauteilfunktionen werden die gleichen Bezugsziffern verwendet.

Im Unterschied zu der zweiten Lichteinheit der Leuchte 1 weist die zweite Leuchteinheit 13 eine oder mehrere Leuchtdioden 14 auf, denen ein einziger parabelförmiger Reflektor 15 zugeordnet ist. Durch den Reflektor 15 ist eine Teilfläche des Reflektors 6 der ersten Lichteinheit 2 verdeckt. Das seitlich von den Leuchtdioden 14 eingespeiste Lichtbündel wird durch die Flächen des Reflektors 15 entsprechend einer vorgegebenen Lichtverteilung umgelenkt.

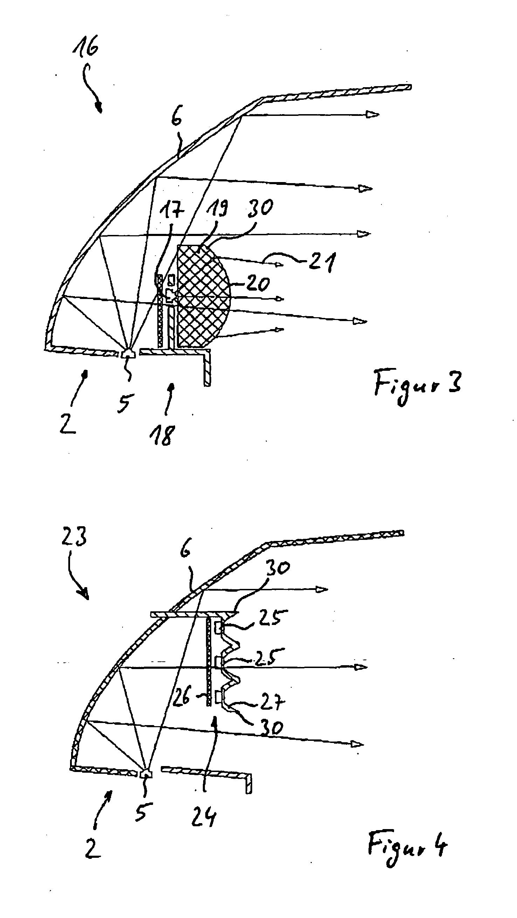

Als Beispiel zur Erleichterung des Verständnisses der Erfindung ist gemäß Figur 3 eine Leuchte 16 vorgesehen, die sich von den vorhergehenden Leuchten dadurch unterscheidet, dass das von einer Leuchtdiode 17 einer zweiten Lichteinheit 18 abgestrahlte Lichtbündel direkt mittels eines Lichtleitelementes 19 umgelenkt bzw. verteilt wird. Im vorliegenden Ausführungsbeispiel ist die Leuchtdiode 17 in Lichtaustrittsrichtung 4 orientiert angeordnet, wobei die optische Achse der Leuchtdiode 17 in Lichtaustrittsrichtung 4 weist. Das Lichtleitelement 19 ist rotationssymmetrisch ausgebildet mit einer sphärischen Vorderseite 20, an der die Lichtstrahlen des von der Leuchtdiode 17 emittierten und in das Lichtleitelement 19 eingekoppelten Lichtbündels 21 entsprechend einer vorgegebenen Lichtverteilung umgelenkt werden.

Die bisherigen Ausführungsformen der Leuchten haben gemeinsam, dass sich die Lichtleitelemente 8, 19 bzw. der Reflektor 15 der zweiten Lichteinheit 3, 13, 18 aus einer Ebene seitlich zur Lichtaustrittsrichtung 4 abragen, in der die Leuchtdioden 5 der ersten Lichteinheit 2 angeordnet sind. In der Ausführungsform gemäß Figur 1 und 2 sind die Leuchtdioden 5, 7, 14 der ersten Lichteinheit 2 und der zweiten Lichteinheit 3, 13 annähernd in einer gemeinsamen Ebene und gleich orientiert angeordnet.

Als Beispiel zur Erleichterung des Verständnisses der Erfindung kann gemäß Figur 4 ist eine Leuchte 23 vorgesehen sein, bei der eine zweite Lichteinheit 24 entfernt von Leuchtdioden 5 der ersten Lichteinheit 2 angeordnet ist. Im Unterschied zu den vorgenannten Leuchten erstreckt sich eine mit Leuchtdioden 25 bestückte Trägerplatte 26 innerhalb des durch den Reflektor 6 aufgespannten Raumes der ersten Lichteinheit 2. Den Leuchtdioden 25 sind jeweils Reflektoren 27 zugeordnet, die einen Teil des von den Leuchtdioden 25 emittierten Lichtbündels in Lichtaustrittsrichtung 4 reflektieren. Vorteilhaft ist die zweite Lichteinheit 24 in einem solchen Bereich der ersten Lichteinheit 2 angeordnet, der für die Lichtfunktion der ersten Lichteinheit 2 eine untergeordnete Bedeutung hat.

Die äußere Randkante der äußere Reflektoren 27 der zweiten Lichteinheit 24 bilden die Grenzlinie 30 der zweiten Lichteinheit 24. Im Unterschied zu den vorhergehenden Ausführungsformen erstreckt sich die Grenzlinie 30 vollständig innerhalb der Lichtaustrittsfläche der ersten Lichteinheit 2, ohne dass sie den Rand der Lichtaustrittsfläche der ersten Lichteinheit 2 schneidet. Die Lichtaustrittsfläche ist definiert als eine Fläche, die sich am vorderen Rand der entsprechenden Lichteinheiten 2, 3 etc. oder im Bereich einer das Gehäuse des Scheinwerfers abdeckenden Abschlussscheibe erstreckt.

Vorteilhaft sind die zweiten Lichteinheiten 3, 13, 18, 24 punktuell am Rand oder innerhalb der ersten Lichteinheit 2 angeordnet. Für unterschiedliche Signalfunktionen können mehrere zweiten Lichteinheiten 3, 13, 18, 24 in der ersten Lichteinheit 2 integriert sein.

Vorteilhaft können die Leuchtdioden 5, 7, 14, 17, 25 als LED-Chip ausgebildet sein, und zwar in Chip-on-Board-Technik oder Chip-on-Frame-Technik. Die Farbe der Leuchtdioden 5, 7, 14, 17, 25 ist entsprechend der Farbe der vorgegebenen Signalfunktion ausgebildet.

Vorzugsweise ist die Lichteinkoppelfläche des Lichtleitelementes muldenförmig ausgebildet, siehe Lichtleitelement 8 nach Ausführungsform der Leuchte 1 gemäß Figur 1.

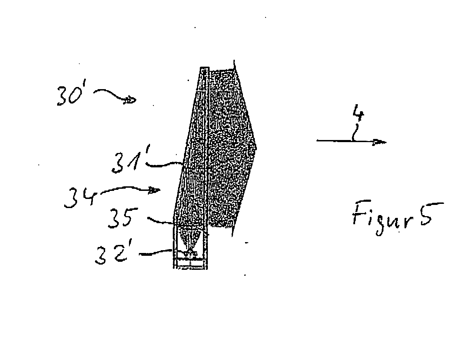

Als Beispiel zur Erleichterung des Verständnisses der Erfindung kann gemäß Figur 5 eine relativ flache erste Lichteinheit 30' vorgesehen sein. Diese erste Lichteinheit 30' kann mit den vorgenannten zweiten Lichteinheiten 3, 13, 18, 24 kombiniert werden. Im Unterschied zu den vorgenannten Ausführungsbeispielen ist eine optisch wirksame Fläche der ersten Lichteinheit 30' als eine verspiegelte Prismenfläche 31' ausgebildet, die sich in Lichtaustrittsrichtung 4 geneigt aus einer Ebene der der ersten Lichteinheit 30' zugeordneten Lichtquelle 32' erstreckt. Die Lichtquelle 32' kann als eine Leuchtdiode (LED) oder Glühlampe ausgebildet sein. Die verspiegelte Prismenfläche 31' ist Bestandteil eines optischen Systems 34, das eine Sammeloptik 35 das eine senkrecht zur Hauptabstrahlrichtung der Leuchtdiode angeordnete Sammeloptik 35 umfasst, an der das von der Leuchtdiode emittierte Lichtbündel gesammelt wird. Die Sammeloptik 35 kann eine Mehrzahl von Fresneloptikelementen aufweisen. Die Sammeloptik 35 sammelt das Licht und leitet es in Richtung der verspiegelten Prismenfläche 31' weiter, an der das Licht in Lichtaustrittsrichtung 4 umgelenkt wird, und zwar entsprechend einer gewünschten Lichtverteilung. Die Sammeloptik 35 zum Lichtsammeln und parallelen Ausrichten des Lichtbündels kann nach einer alternativen Ausführungsform auch als ein Linsensystem oder auch durch einen Zusatzreflektor gebildet sein.

Die Umlenkfläche 31' kann unter einem beliebigen Winkel zu der Sammeloptik 35 angeordnet sein.

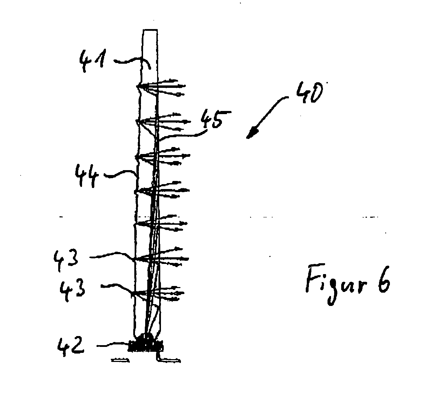

Als weiteres Beispiel zur Erleichterung des Verständnisses der Erfindung kann eine besonders flache erste Lichteinheit 40 gemäß Figur 6 vorgesehen sein, die im Unterschied zu dem vorhergehenden Ausführungsbeispiel als optisches System lediglich eine Lichtleitplatte 41 vorsieht. Die Lichtleitplatte 41 ist entgegen der als Leuchtdiode ausgeführten Lichtquelle 42 verjüngend ausgebildet. Als optisch wirksame Fläche dient eine mit optischen Strukturen 43 ausgebildete Rückseite 44 der Lichtleitplatte 41. Ein Teil des eingespeisten Lichtbündels wird an einer Vorderseite 45 der Lichtleitplatte 41 totalreflektiert in Richtung der Rückseite 44, an der mittels der optischen Struktur eine weitere Reflexion auftritt, so dass das Lichtbündel an der Vorderseite 45 ausgekoppelt wird.

Als Beispiel zur Erleichterung des Verständnisses der Erfindung kann eine nicht dargestellte Ausführungsform einer ersten Lichteinheit kann durch eine Zusatzlichtscheibe mit Fresneloptikbereichen und jeweils dahinter angeordneten Leuchtdioden bestehen. Diese Zusatzlichtscheibe kann als ebene Fläche ausgelegt sein mit stufenförmigen Abschnitten, um bestmöglich der vorgegebenen Leuchtenkontur zu folgen.

Als Beispiel zur Erleichterung des Verständnisses der Erfindung kann nach einer nicht dargestellten alternativen Ausführungsform der ersten Lichteinheit dieselbe einen relativ großen flachen Reflektor aufweisen, an dessen Seiten die lichtabgebenden Leuchtdioden oder Glühlampen angeordnet sind.

Als Beispiel zur Erleichterung des Verständnisses der Erfindung kann nach einer nicht dargestellten alternativen Ausführungsform die erste Lichteinheit auch direkt abstrahlende Leuchtdioden umfassen, die flächig nebeneinander angeordnet sind.

Die erste Lichteinheit der oben beschriebenen Ausführungsformen wird vorzugsweise zur Erzeugung einer Schlusslichtfunktion eingesetzt, wobei im Betriebszustand der ersten Lichteinheit die vorgelagerte zweite Lichteinheit beleuchtet wird.

## Patentansprüche

1. Leuchte für Fahrzeuge, insbesondere Kraftfahrzeuge, mit einer ersten Lichteinheit (2) enthaltend mindestens eine Leuchtdiode (5) und eine derselben zugeordnete optisch wirksame Fläche (6) zur Bildung einer ersten Lichtfunktion und mit einer in Lichtaustrittsrichtung (4) vor der ersten Lichteinheit (2) gelagerten zweiten Lichteinheit (3, 13) enthaltend eine Leuchtdiode (7, 14) als Lichtquelle und eine optisch wirksame Fläche (8, 15), wobei die optisch wirksamen Flächen (6, 8, 15) der ersten Lichteinheit (2) und der zweiten Lichteinheit (3, 13) derart angeordnet sind, dass in Projektion auf eine Lichtaustrittsfläche lediglich eine einzige durchgehende Grenzlinie zwischen dem von der ersten Lichteinheit (2) emittierten Lichtbündel und dem von der zweiten Lichteinheit (3, 13) emittierten Lichtbündel gebildet ist und dass die zweite Lichteinheit (3, 13) rückseitig von der ersten Lichteinheit (2) im Betriebszustand derselben beleuchtet wird, **dadurch gekennzeichnet, dass** die Leuchtdiode (5) der ersten Lichteinheit (2) und die Leuchtdiode (7, 14) der zweiten Lichteinheit (3, 13) parallel zueinander verlaufende optische Achsen aufweisen, die senkrecht zur Lichtaustrittsrichtung (4) orientiert verlaufen, wobei die Leuchtdiode (5) der ersten Lichteinheit (2) und die Leuchtdiode (7, 14) der zweiten Lichteinheit (3, 13) annähernd in einer gemeinsame Ebene und gleich orientiert angeordnet sind.

2. Leuchte nach Anspruch 1, **dadurch gekennzeichnet, dass** die optisch wirksame Fläche der ersten Lichteinheit (2) als eine Reflexionsfläche (6) ausgebildet ist, die größer als die optisch wirksame Fläche (8, 15) der zweiten Lichteinheit (3, 13) ist, derart, dass das von der ersten Lichteinheit (2) emittierte Lichtbündel in Projektion auf die Lichtaustrittsfläche eine größere Fläche umfasst als das von der zweiten Lichteinheit (3, 13) emittierte Lichtbündel.

3. Leuchte nach Anspruch 1 oder 2, **dadurch gekennzeichnet, dass** die optisch wirksame Fläche (8) der zweiten Lichteinheit (3) als ein transparentes Lichtleitelement (8) ausgebildet ist.

4. Leuchte nach Anspruch 1 oder 2, **dadurch gekennzeichnet, dass** die optisch wirksame Fläche (15) der zweiten Lichteinheit (13) als ein Reflektor (15) ausgebildet ist.

5. Leuchte nach Anspruch 3, **dadurch gekennzeichnet, dass** das Lichtleitelement (8) der zweiten Lichteinheit (3) eine parabelförmige oder ellipsoidförmige Rückseite (9) aufweist, an der das eingekoppelte Lichtbündel in Lichtaustrittsrichtung (4) total reflektiert wird.

6. Leuchte nach Anspruch 3, **dadurch gekennzeichnet, dass** die Leuchtdiode (7) der zweiten Lichteinheit (3) unmittelbar an einer Lichteintrittsfläche des Lichtleitelementes (8) anliegt.

7. Leuchte nach einem der Ansprüche 1 bis 6, **dadurch gekennzeichnet, dass** die erste Leuchteinheit (2) eine Mehrzahl von in einer Reihe angeordneter Leuchtdioden (5) aufweist.

8. Leuchte nach einem der Ansprüche 1 bis 7, **dadurch gekennzeichnet, dass** die Leuchtdioden (5, 7, 14) als Leuchtdioden-Chips ausgebildet sind.

## Claims

1. Vehicular lamp, in particular for motor vehicles, having a first light unit (2) comprising at least one light emitting diode (5) and an optically active area (6) assigned thereto to create a first light function and a second light unit (3, 13) disposed ahead of the first light unit (2) as seen in light emitting direction which second light unit comprises a light emitting diode (7, 14) as a light source and an optically active area (8, 15) wherein said optically active areas (6, 8, 15) of the first light unit (2) and the second light unit (3, 13) are arranged in such a way that in projection to a light emitting surface just one continuous boundary line is formed between the light beam emitted by the first light unit (2) and the one emitted by the second light beam (3, 13) and that the second light unit (3, 13) has its rear illuminated by the first light unit (2) when said latter is activated, **characterized in that** the light emitting diode (5) of the first light unit (2) and the light emitting diode (7, 14) of the second light unit (3, 13) have parallel extending optical axes which are oriented perpendicular to the light emitting direction wherein the light emitting diode (5) of the first light unit (2) and the light emitting diode (7, 14) of the second light unit (3, 13) are disposed in substantially the same plane and in equal orientation.

2. Vehicular light according to Claim 1, **characterized in that** the optically active area of the first light unit (2) is in the form of a reflective surface (6) which is larger than the optically active area (8, 15) of the second light unit (3, 13) such that the light beam emitted by the first light unit (2) is in projection to the light emitting surface larger than the light beam emitted by the second light unit (3, 13).

3. Vehicular lamp according to Claim 1 or 2, **characterized in that** the optically active area (8) of the second light unit (3) is in the form of a transparent light conductive element (8).

4. Vehicular lamp according to Claim 1 or 2, **characterized in that** the optically active area (15) of the second light unit (15) is in the form of a reflector.

5. Vehicular lamp according to Claim 3, **characterized in that** the light conductive element (8) of the second light unit (3) has a parabolic or ellipsoid rear face (9) for the input light beam to be completely reflected from in light emitting direction (4).

6. Vehicular light according to Claim 3, **characterized in that** the light emitting diode (7) of the second light unit (3) is in direct contact with the light input surface of the light conductive element (8).

7. Vehicular light according to any of the preceding Claims 1 to 6, **characterized in that** the first light unit (2) comprises a plurality of light emitting diodes (5) arranged in one row.

8. Vehicular light according to any of the preceding Claims 1 to 7, **characterized in that** the light emitting diodes (5, 7, 14) are in the form of LED chips.

## Revendications

1. Feu pour véhicules, en particulier pour véhicules automobiles, doté d'une première unité d'éclairage (2), qui comprend au moins une diode électroluminescente (5) et une surface optiquement active (6), associée à celle-ci pour la réalisation d'une première fonction d'éclairage, et d'une deuxième unité d'éclairage (3, 13), qui, installée en amont de la première unité d'éclairage (2), dans la direction de sortie de la lumière (4), comprend une diode électroluminescente (7, 14), en tant que source lumineuse, et une surface optiquement active (8, 15), les surfaces optiquement actives (6, 8. 15) de la première unité d'éclairage (2) et de la deuxième unité d'éclairage (3, 13) étant agencées de sorte que, lors de la projection sur une surface de sortie de la lumière, une seule ligne limite continue soit formée entre le faisceau lumineux, émis par la première unité d'éclairage (2), et le faisceau lumineux, émis par la deuxième unité d'éclairage (3, 13), et que la deuxième unité d'éclairage (3, 13) soit éclairée, à l'arrière, par la première unité d'éclairage (2), quand celle-ci est en mode de fonctionnement, **caractérisé en ce que** la diode électroluminescente (5) de la première unité d'éclairage (2) et la diode électroluminescente (7, 14) de la deuxième unité d'éclairage (3, 13) présentent des axes optiques, parallèles l'un à l'autre, qui sont orientés perpendiculairement à la direction de sortie de la lumière (4), la diode électroluminescente (5) de la première unité d'éclairage (2) et la diode électroluminescente (7, 14) de la deuxième unité d'éclairage (3, 13) étant disposées approximativement sur un plan commun et orientées identiquement.

2. Feu selon la revendication 1, **caractérisé en ce que** la surface optiquement active de la première unité d'éclairage (2) est réalisée sous la forme d'une surface de réflexion (6), qui est plus grande que la surface optiquement active (8, 15) de la deuxième unité d'éclairage (3, 13), de sorte que le faisceau de lumière, émis par la première unité d'éclairage (2), en projection sur la surface de sortie de la lumière, embrasse une plus grande surface que le faisceau de lumière émis par la deuxième unité d'éclairage (3, 13).

3. Feu selon revendication 1 ou 2, **caractérisé en ce que** la surface optiquement active (8) de la deuxième unité d'éclairage (3) est réalisée sous la forme d'un élément guide de lumière (8).

4. Feu selon revendication 1 ou 2, **caractérisé en ce que** la surface optiquement active (15) de la deuxième unité d'éclairage (13) est réalisée sous la forme d'un réflecteur (15).

5. Feu selon la revendication 3, **caractérisé en ce que** l'élément guide de lumière (8) de la deuxième unité d'éclairage (3) présente une face arrière (9) en forme de parabole ou en forme d'ellipse, sur laquelle le faisceau de lumière couplé est totalement réfléchi dans la direction de sortie de la lumière (4).

6. Feu selon la revendication 3, **caractérisé en ce que** la diode électroluminescente (7) de la deuxième unité d'éclairage (3) est située directement contre une surface d'entrée de la lumière de l'élément guide de lumière (8).

7. Feu selon l'une des revendications 1 à 6, **caractérisé en ce que** la première unité d'éclairage (2) présente une pluralité de diodes électroluminescentes (5), qui sont disposées sur une rangée.

8. Feu selon l'une des revendications 1 à 7, **caractérisé en ce que** les diodes électroluminescentes (5, 7, 14) sont réalisées en forme de puces à diodes luminescentes.
